# EUROPÄISCHE PATENTSCHRIFT

(11) **EP 1 334 886 B1**
(45) Veröffentlichungstag und Bekanntmachung des Hinweises auf die Patenterteilung: **03.11.2004**
(21) Anmeldenummer: 03010232.1
(22) Anmeldetag: 13.09.2000
(51) Int. Cl.: B60R 21/34, B62D 25/16

(54) **Vorderbau für ein Kraftfahrzeug**
Front structure for a motor vehicle
Structure avant pour un véhicule automobile

(30) Priorität: 19.10.1999 DE 19950294; 11.12.1999 DE 19959892
(43) Veröffentlichungstag der Anmeldung: 13.08.2003
(62) Teilanmeldung aus: 00978935.5
(73) Patentinhaber: ADAM OPEL AG, 65423 Rüsselsheim (DE)
(72) Erfinder: Kerkeling, Christoph, 55118 Mainz (DE)

(56) Entgegenhaltungen:
- EP-A- 0 853 032
- DE-A- 2 934 060
- DE-U- 8 910 122

## Beschreibung

### Technisches Gebiet

Die Erfindung bezieht sich auf den Vorderbau eines Fahrzeuges mit den Merkmalen des Oberbegriffes des Anspruchs 1. Dessen Gestaltung unterliegt vielen unterschiedlichen Erfordernissen. Ein Gesichtspunkt ist u. a. der Schutz von Fußgängern bei Unfällen. Neue Forderungen des Gesetzgebers stellen insbesondere die Reduzierung der auf den Kopf der angefahrenen Person wirkenden Kräfte in den Vordergrund. Der Vorderbau soll so gestaltet sein, dass deren Wirkungen möglichst kein sind, also schwere Kopfverletzungen vermieden werden.

### Stand der Technik

Mit dieser Problematik beschäftigt sich auch die gattungsgemäße DE 29 34 060 A1. Hier wird vorgeschlagen, die Fronthaube und die diese umrahmenden Karosserieteile (Kotflügel) über bleibend verformbare Deformationsglieder an den Versteifungsteilen des Fahrzeugaufbaus abzustützen. Die konkrete Ausführung des Vorschlages besteht aus einem halbkreisförmig gebogenen Blech zwischen der inneren Kante der Außenhaut des Kotflügels und einem darunter liegenden Versteifungsteil. Dasselbe gilt für die dem Kotflügel gegenüberliegende Kante der Fronthaube. Schlägt bei einem Unfall der Kopf des Fußgängers in diesem Bereich auf, nehmen die Deformationsglieder die Stoßenergie auf, wodurch der Kopfaufprall relativ weich erfolgen soll.

Diese Überlegung wird in der DE 44 01 023 C1 aufgegriffen. Die Anbindung der Außenhaut des Kotflügels an das Versteifungsteil erfolgt mittels eines sogenannten Anbindungssteges, der auf einem steifen Auflagesattel des Randeinbaues aufliegt und beim Aufprall an diesem abrollt. Außerdem werden zwischen dem Anbindungssteg und dem Auflagesattel nachgiebige Befestigungswinkel angeordnet. Auf diese Weise soll ebenfalls erreicht werden, dass die Kräfte, die auf den aufschlagenden Kopf eines Fußgängers wirken, klein bleiben.

Bei dieser Ausführung besteht der Nachteil, dass die Kotflügel heutiger Kraftfahrzeuge meist einen sehr schmalen oberen Bereich aufweisen. Daher wird bei einem Aufprall des Kopfes des Fußgängers meist anstelle des Kotflügels der diesem nahe Bereich der Haube getroffen. Die Haube gibt bei hohen Belastungen nach, während eine an die Haube angrenzende Kante des Kotflügels stehen bleibt und Ursache für Kopfverletzungen sein kann.

In der DE 89 10 122 U1 wird das Seitenteil eines Fahrzeuges bestehend aus einem Radhaus und einem Kotflügel beschrieben. Radhaus und Kotflügel bestehen aus Kunststoff und sind an ihren Außenkanten miteinander verbunden, wobei der Kotflügel sich über das Radhaus zur Fronthaube erstreckt.

### Das zu lösende Problem

Um die Verletzungsgefahr für von einem Fahrzeug angefahrene Fußgänger zu verringern, wird man fordern müssen, dass die Kräfte beim Aufschlag auf die Fronthaube nicht zu groß werden. Man kann dies erreichen, indem diese nachgiebig gestaltet und zwischen ihr und den Aggregaten im Motorraum bzw. weiteren Karosserieteilen ausreichend Platz gelassen wird, so dass bei einem aufschlagbedingten Eindrücken der Fronthaube die unter der Fronthaube liegenden Aggregate keine Hindernisse darstellen. Kritisch sind allerdings Kopfaufschläge im Übergang zwischen Fronthaube und Kotflügel. Die Außenhaut des Kotflügels wird im Allgemeinen nämlich so an die Karosserie angebunden, dass der Innenrand der Außenhaut nach innen abgeknickt und mit einer unter der Motorhaube verlaufenden Strebe verbunden ist. Die dabei entstehende Kante liegt dem Rand der Motorhaube gegenüber und stellt eine nicht nachgiebige Versteifungsstelle dar, von der ein erhebliches Gefährdungspotenzial ausgeht. Die bisher bekannten Lösungen im Stand der Technik sehen daher vor, den nach unten abgeknickten Teil des Kotflügels als Deformationselement auszubilden. Da es bei dieser Lösung bei einer versteiften Kante bleibt, können verletzungswirksame Kraftspitzen nicht ausgeschlossen werden.

Die Erfindung beruht damit auf der Aufgabe, den Vorderbau des Fahrzeuges, insbesondere den Übergang zwischen Kotflügel und Motorhaube so zu gestalten, dass von diesem Bereich nur ein geringes Gefährdungspotenzial für Fußgänger in einer Fahrzeug-Fußgängerkollision ausgeht.

### Erfindungegemäße Lösung

Zur Lösung des Problems wird vorgeschlagen, den Vorderbau eines Fahrzeuges, insbesondere eines Personenkraftwagens mit einer einen Motorraum nach oben abschließenden, im Wesentlichen horizontal verlaufenden Fronthaube und mit zwei dem Motorraum seitlich begrenzenden Seitenwänden, die jeweils mit einem Kotflügel versehen sind, der nach innen gebogen ist, wobei der innere Abschnitt bündig unter Bildung einer Fuge in die Fronthaube übergeht, wie folgt zu gestalten: Der Vorderbau ist mit einer unterhalb der Fuge angeordneten und in Abstand zu dieser verlaufenden Strebe versehen, von der nach oben eine Halterung absteht, die den Kotflügel im Abstand zu seiner inneren Kante unterstützt, so dass der innere Abschnitt des Kotflügels frei in Richtung auf die Fronthaube über diese Abstützung hinausragt, so dass der Abschnitt frei nach unten gedrückt werden kann, wobei er an der Stelle abknickt, an der der Halter ansetzt.

Bei einem Kopfaufprall auf den Fugenbereich kann der frei abstehende Abschnitt des Kotflügels leicht nachgeben, da er in keiner Weise abgestützt ist. Er wird lediglich an der Stelle abknicken, an der der Halter für den Kotflügel ansetzt.

Um auch die Verletzungsgefahr bei Aufschlägen zu minimieren, die weiter außen am Kotflügel erfolgen, wird vorgeschlagen, dass der Halter an einer Stelle ansetzt, an dem der Kotflügel schräg nach unten verläuft, so dass die auf den Halter wirkende Aufschlagkomponente klein ist.

Des Weiteren wird vorgeschlagen, den Kotflügel aus Kunststoff zu fertigen. Dies hat den Vorteil, dass der Widerstand gegen Verformungen bei unfallbedingten Aufschlägen klein ist. Außerdem kann ein Kunststoff gewählt werden, der sich reversibel verhält, also nach einer Eindrückung seine ursprüngliche Form wieder einnimmt, so dass für den Fall, dass sich eine Person in diesem Bereich am Fahrzeug abstützt, keine bleibenden Verformungen verbleiben.

### Ausführungsbeispiele

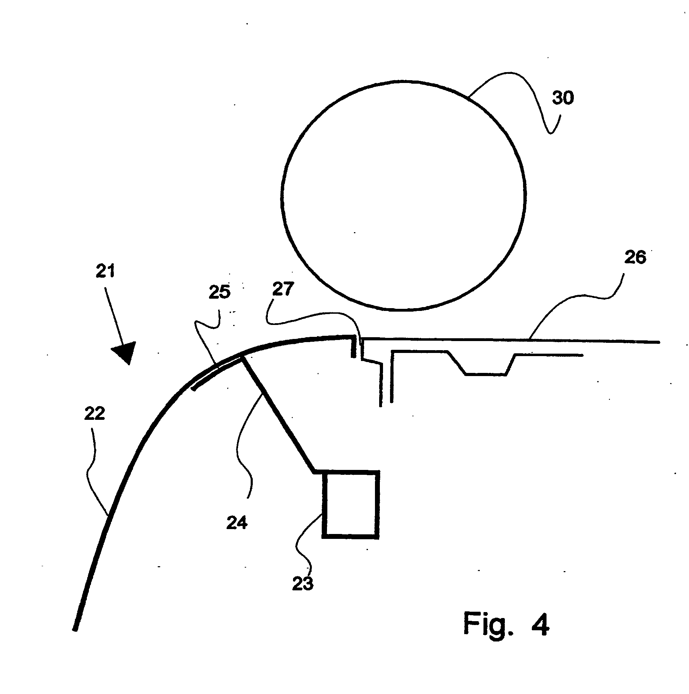

Die Erfindung lässt zahlreiche Ausführungsformen zu. Zur weiteren Verdeutlichung ihres Grundprinzips ist eine davon in der Zeichnung Fig.4 dargestellt und wird nachfolgend beschrieben. Diese zeigt in
- Fig. 1: einen rechten Teilbereich eines Vorderbaus eines Kraftfahrzeuges im Querschnitt,
- Fig. 2: eine vergrößerte Darstellung des seitlichen Bereichs des Vorderbaus aus Figur 1 im Normalzustand,
- Fig. 3: den Vorderbau aus Figur 2 nach einer Bewegung der Haube nach unten,
- Fig. 4: einen Querschnitt durch eine Seitenwand eines Fahrzeuges.

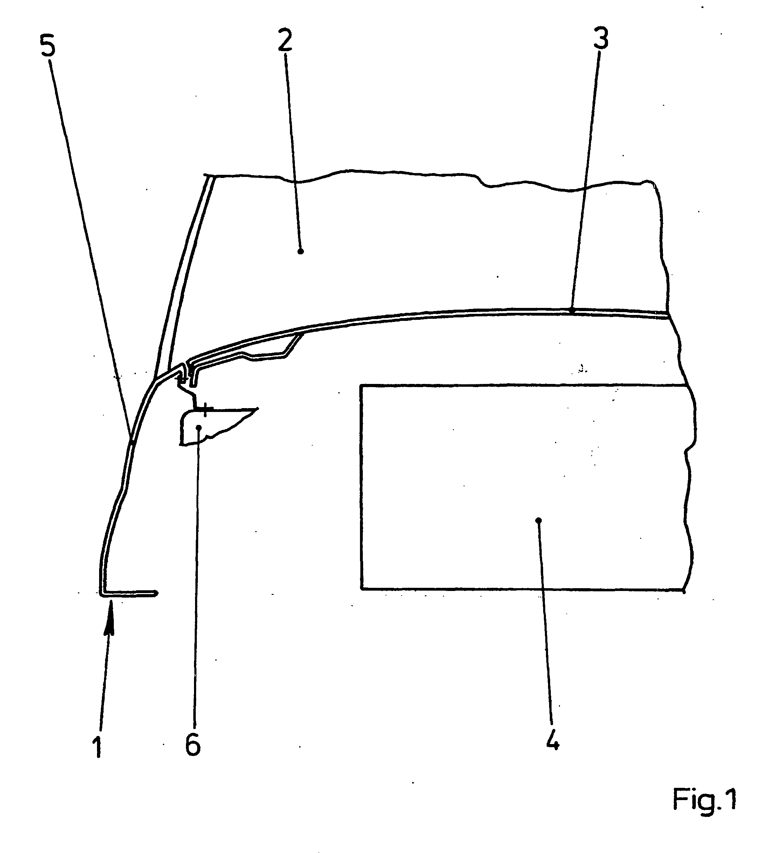

Das Ausführungsbeispiel nach den Figuren 1 bis 3 dient insbesondere der Erläuterung des der Erfindung zugrundeliegenden Problems. Das Ausführungsbeispiel nach Fig. 4 ist eine Realisation des Patentgegenstandes.

Figur 1 zeigt einen rechten Teilbereich eines Vorderbaus 1 eines Kraftfahrzeuges im Querschnitt und eine sich an den Vorderbau 1 anschließende Frontscheibe 2. Der Vorderbau 1 hat eine schwenkbar gelagerte Haube 3, welche in ihrer eingezeichneten Lage eine schematisch dargestellte Brennkraftmaschine 4 des Kraftfahrzeuges überdeckt. Seitlich wird der Vorderbau 1 von einem Kotflügel 5 begrenzt. Der Kotflügel 5 ist an einem ebenfalls schematisch dargestellten Karosserieteil 6 befestigt.

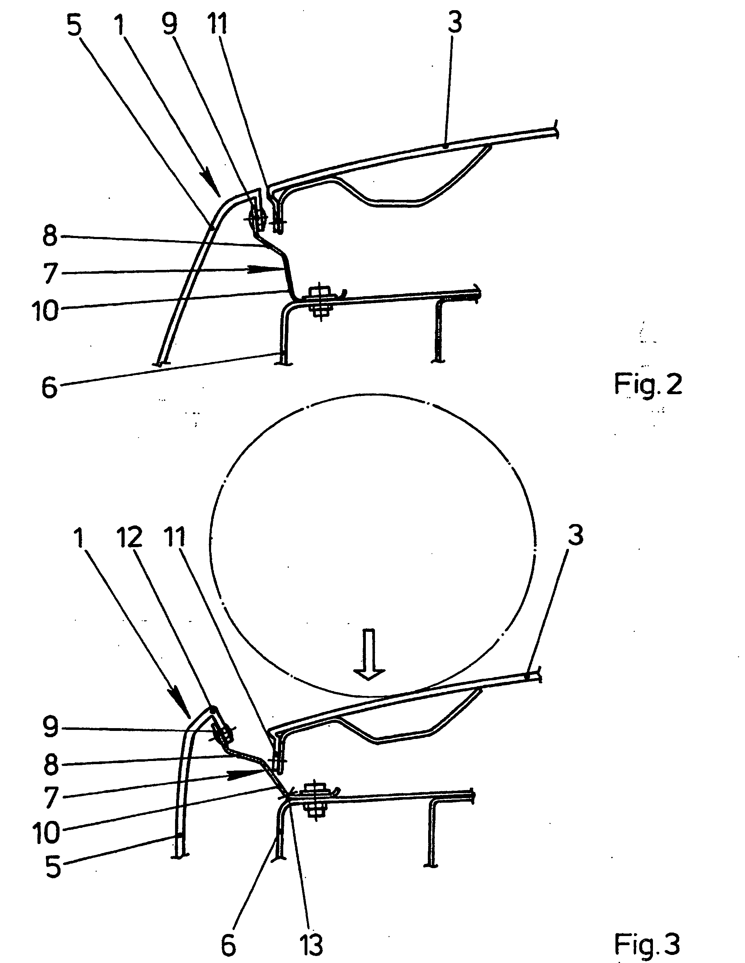

Figur 2 zeigt stark vergrößert den äußeren seitlichen Bereich des Vorderbaus 1 aus Figur 1. Hierbei ist zu erkennen, dass zwischen dem Kotflügel 5 und dem Karosserieteil 6 ein Blechteil 7 angeordnet ist. Das Blechteil 7 weist eine Rampe 8 auf und ist im Vergleich zu dem Kotflügel 5 besonders dünnwandig gestaltet. An den vertikalen Enden der Rampe 8 schließen sich jeweils vertikale Abschnitte 9, 10 an. Die Haube 3 hat an ihrem äußeren seitlichen Bereich einen abgewinkelten, gegen die Rampe 8 weisenden Rand 11.

Bei einem Unfall des Kraftfahrzeuges mit einem Fußgänger besteht häufig die Gefahr, dass dieser mit dem Kopf auf die Haube 3 aufprallt. Diese ist um ein vorgesehenes Maß nachgiebig gestaltet. Hierdurch gelangt das Ende des Randes 11 der Haube 3 gegen die Rampe 8 des Blechteils 7 und gleitet an dieser entlang. Dabei verschwenkt das Blechteil 7 um eine horizontal an dem Karosserieteil 6 angeordnete, senkrecht zur Zeichenebene verlaufende Achse 13.

Dieser Zustand ist in Figur 3 dargestellt. Der obere Bereich des Kotflügels 5 wird dabei seitlich nach außen und geringfügig nach unten hin weggedrückt. Hierdurch wird eine zu der Haube 3 weisende Kante 12 des Kotflügels 5 von dem Bereich des Kraftfahrzeuges, in dem der Kopf des Fußgänger gegen die Haube 3 gelangt ist, herausbewegt. Zur Verdeutlichung ist in der Zeichnung der Kopf des Fußgängers als strichpunktierter Kreis dargestellt und dessen Bewegungsrichtung auf die Haube 3 mit einem Doppelpfeil gekennzeichnet.

Eine weitere Lösung ist in Figur 4 gezeigt: Die Seitenwand 21 besteht aus einem Kotflügel 22, der die Außenhaut des Seitenteils bildet. Gehalten wird dieser Kotflügel an einer in Längsrichtung verlaufenden Strebe 23, an der über einen oder mehrere Halter 24 der Kotflügel 22 befestigt ist. Bei den Haltern 24 kann es sich auch um ein durchgehendes Blech handeln, das parallel zur Strebe verläuft.

Der Kotflügel 22 verläuft im Querschnitt betrachtet in einem aufsteigenden Bogen nach innen und geht dort bündig unter Bildung einer Fuge 27 in eine Fronthaube 26 über. Der Kotflügel 22 bildet damit einen seitlichen Rahmen für die Fronthaube 26.

Wie man der Darstellung entnehmen kann, steht das innere Ende des Kotflügels 22, das der Fronthaube 26 benachbart ist, frei über die Abstützstelle 25 des Halters 24 am Kotflügel 22 hinaus und kann daher frei nach unten gedrückt werden. Außerdem kann man der Darstellung entnehmen, dass die Strebe 23 unterhalb der Fuge 27 verläuft und einen ausreichend großen Abstand zur Fronthaube 26 einhält. Damit wird erreicht, dass diese bei einem Aufschlag frei nachgeben kann, ohne dass sich ihr Hindernisse in den Weg stellen, die zu einer Erhöhung der Krafteinwirkung auf den aufschlagenden Kopf führen würden.

Oberhalb der Fronthaube 26 ist ein Prüfkörper 30 schematisch angedeutet. Er symbolisiert einerseits den Kopf eines Fußgängers und andererseits ein Simulationselement, mit dem in entsprechenden Versuchen die Parameter bestimmt werden, die für einen Kopfaufprall typisch sind und es erlauben, den Vorderbau eines Fahrzeuges hinsichtlich des Gefahrenpotenzials für Fußgänger einzuordnen und zu bewerten.

Die entsprechenden Prüfvorschriften sehen vor, dass entlang bestimmter Linien genormte Prüfkörper aufgeschlagen werden, um die oben erwähnten Parameter zu bestimmen.

Die Darstellung zeigt den Prüfkörper 30 an einer Stelle, die gemäß den Prüfvorschriften als weit außen liegend bezeichnet werden kann. Man erkennt, dass bei einer Eindrückung der Fronthaube 26 durch den Prüfkörper 30 dieser Kontakt mit dem Kotflügel 22 erhält und dessen über den Halter 24 überstehenden Bereich nach unten drückt. Da der Kotflügel aus Kunststoff hergestellt ist, werden nur geringe zusätzliche Kräfte auf den Prüfkörper 30 bzw. aufschlagenden Kopf ausgeübt.

### Bezugszeichenliste

- 1: Vorderbau
- 2: Frontscheibe
- 3: Haube
- 4: Motor
- 5: Kotflügel
- 6: Karosserieteil
- 7: Blechteil
- 8: Rampe
- 9, 10: Abschnitte
- 11: Rand
- 12: Kante
- 13: Achse
- 21: Seitenwand
- 22: Kotflügel
- 23: Strebe
- 24: Halter
- 25: Abstützstelle
- 26: Fronthaube
- 27: Fuge
- 30: Prüfkörper

## Patentansprüche

1. Vorderbau eines Fahrzeuges, insbesondere eines Personenkraftwagens mit einer einen Motorraum nach oben abschließenden, im Wesentlichen horizontal verlaufenden Fronthaube (26) und mit zwei den Motorraum seitlich begrenzenden Seitenwänden (21), die jeweils mit einem Kotflügel (22) versehen sind, der nach innen gebogen ist, wobei der innere Abschnitt bündig unter Bildung einer Fuge (27) in die Fronthaube (26) übergeht, und mit einer unterhalb der Fuge (27) angeordneten und in Abstand zu dieser verlaufenden Strebe (23), von der nach oben eine Halterung (25) absteht, **dadurch gekennzeichnet, dass** die Halterung (25) den Kotflügel (22) im Abstand zu seiner inneren Kante unterstützt, so dass der innere Abschnitt des Kotflügels (22) frei in Richtung auf die Fronthaube (26) über diese Abstützung hinausragt, so dass der Abschnitt frei nach unten gedrückt werden kann, wobei er an der Stelle abknickt, an der der Halter ansetzt.

2. Vorderbau nach Anspruch 1, **dadurch gekennzeichnet, dass** die Abstützung des Kotflügels an einer Stelle (25) erfolgt, an der eine an den Kotflügel (22) anliegende Tangente seitlich nach unten zeigt.

3. Vorderbau nach Anspruch 1 oder 2, **dadurch gekennzeichnet, dass** der Kotflügel (22) aus Kunststoff besteht.

4. Vorderbau nach Anspruch 3, **dadurch gekennzeichnet, dass** der Kotflügel (22) mit der Halterung (24) verklebt oder reibverschweißt ist.

## Claims

1. Front part of a vehicle, in particular a passenger car, with a substantially horizontally extending bonnet (26) which closes an engine compartment at the top and with two side panels (21) which define the engine compartment at the sides and which are each provided with a wing (22) which is curved inwards, wherein the inner section merges level with the bonnet (26), forming a gap (27), and with a strut (23) which is arranged below the gap (27) and runs at a distance from it, and from which a support (25) projects upwards, **characterised in that** the support (25) supports the wing (22) at a distance from its inner edge, so that the inner section of the wing (22) protrudes freely beyond this supporting system in a direction towards the bonnet (26), so that the section can be pushed down freely, bending at the point at which the bracket is attached.

2. Front part according to claim 1, **characterised in that** the wing is supported at a point (25) at which a tangent to the wing (22) points laterally downwards.

3. Front part according to claim 1 or 2, **characterised in that** the wing (22) is made of plastic.

4. Front part according to claim 3, **characterised in that** the wing (22) is adhered or friction-welded to the support (24).

## Revendications

1. Structure avant d'un véhicule, en particulier d'une voiture particulière avec un capot frontal (26) sensiblement horizontal et fermant un compartiment moteur par le haut, et avec deux parois latérales (21) limitant latéralement le compartiment moteur qui sont munies à chaque fois d'une aile (22) qui est incurvé vers l'intérieur, la section intérieure arrive au niveau du capot frontal (26) en formant une fente (27), et avec un étai (23) disposé en dessous de la fente (27) et écarté de celle-ci, duquel s'écarte vers le haut un support (25), **caractérisée en ce que** le support (25) soutient l'aile (22) écartée de son arrête intérieure de manière à ce que la section intérieure de l'aile (22) dépasse librement sur cet appui en direction du capot frontal (26), de manière à ce que la section puisse être librement poussée vers le bas, ladite section se pliant à l'endroit où est placé le support

2. Structure avant selon la revendication 1, **caractérisée en ce que** le support de l'aile s'effectue à l'endroit (25) au niveau duquel une tangente adjacente à l'aile (22) pointe latéralement vers le bas.

3. Structure avant selon la revendication 1 ou 2, **caractérisée en ce que** l'aile (22) est en plastique.

4. Structure avant selon la revendication 3, **caractérisée en ce que** l'aile (22) est collée ou soudée par friction au support (24).
